# EUROPEAN PATENT SPECIFICATION

(11) **EP 3 831 572 B1**
(45) Date of publication and mention of the grant of the patent: **22.12.2021**
(21) Application number: 20204796.5
(22) Date of filing: 29.10.2020
(51) Int. Cl.: B29C 49/46, B29C 49/42, B67C 7/00, B29C 49/06, B29L 31/00, B67C 3/22

(54) **TRANSFER SYSTEM FOR TRANSFERRING CONTAINERS OR PARISONS AND A TREATMENT OR PROCESSING APPARATUS COMPRISING SUCH SYSTEM**
ÜBERGABESYSTEM ZUM ÜBERGEBEN VON BEHÄLTERN ODER VORFORMLINGEN UND BEHANDLUNGS- ODER VERARBEITUNGSVORRICHTUNG, DIE EIN SOLCHES SYSTEM ENTHÄLT
SYSTÈME DE TRANSFERT POUR LE TRANSFERT DE CONTENEURS OU DE PRÉFORMES ET D'UN APPAREIL DE TRAITEMENT COMPRENANT UN TEL SYSTÈME

(30) Priority: 02.12.2019 IT 201900022677
(43) Date of publication of application: 09.06.2021
(73) Proprietor: Gea Procomac S.p.A., 43038 Sala Baganza (PR) (IT)
(72) Inventor: RABOINI, Gianmaria, 43038 Sala Baganza (PR) (IT); BELLINI, Vittorio, 43038 Sala Baganza (PR) (IT)
(74) Representative: Dondi, Silvia

(56) References cited:
- EP-A2- 2 361 874
- DE-A1-102016 103 756
- DE-U1-202011 109 959
- US-A1- 2011 250 307

## Description

The present invention relates to a transfer system for transferring containers or parisons and to a treatment or processing apparatus comprising such system.

Bottling plants comprise various units for treating or processing parisons or containers, among which appropriate systems are interposed for transferring the parisons or containers. For example, a parison treatment unit is the oven adapted to heat the tubular body of the parisons, which are then subjected to stretch-blowing to obtain the containers in a processing unit known as a blowing machine. The containers are then filled with a fluid in another processing unit which is the filling machine. The reference sector is in particular that of the bottling of so-called "sensitive" food products, that is, products that are particularly sensitive to bacteriological contamination and oxidation, such as, for example, isotonic drinks, juices, nectars, soft drinks, tea, milk-based drinks, coffee-based drinks, etc., for which the prevention of microbiological contamination is of fundamental importance.

In the context in which the forming of the receptacles takes place in nonaseptic conditions, it is fundamental to guarantee the periodic cleaning of the environment or the unit in which the filling takes place.

The cleaning cycles envisage the use of detergents which, being able to reach areas adjacent to the filling area (e.g. the forming unit), risk corroding and damaging some components.

A known solution, proposed by document WO2010081759, envisages a partition wall between two adjacent units and a transfer star-wheel for transferring the containers which can be partially positioned through an opening obtained in the wall. By manually reversing a part of the star-wheel it is possible to free the opening and enable the closing thereof with an appropriate means associated therewith.

Another known solution, proposed in EP2361874, envisages an automatic reversing of the transfer star-wheel, the reversing being synchronised with the closure of a bulkhead for separating the two adjacent environments. The solutions of the known type mentioned above all imply the drawback of structural complexity due to the need to move at least part of the transfer star-wheel.

In a further known solution, proposed in WO201948249, the two adjacent environments may be at least partially separated by a partition element formed by two portions, an upper one and a lower one. Such portions are movable along a direction substantially perpendicular to the transport plane and, in particular, they move towards one another in proximity to the pick-up elements, leaving a space for the air so as to respect the safety regulations.

This solution is also structurally complex.

From document DE 202011109959 U1 it is known a transfer system according to the preamble of claim 1.

In this context, the technical task at the basis of the present invention is to propose a transfer system for transferring containers or parisons and a treatment or processing apparatus comprising such system, which overcome the aforementioned disadvantages of the prior art.

In particular, an object of the present invention is to propose a transfer system for transferring containers or parisons having a simplified structure with respect to the solutions of the prior art.

The defined technical task and the specified aims are substantially achieved by a transfer system for transferring containers or parisons, comprising:
- a first rotating unit and a second rotating unit, respectively arranged in two adjacent environments, pick-up elements for picking up the containers or the parisons being installed on each of said rotating units;
- a separation element of the environments, which is configurable in at least a first position in which it separates the two environments so that the transfer of the containers or the parisons from one environment to the other is prevented, and a second position in which it enables communication between the two environments so that the rotating units are facing at an exchange zone of containers or parisons.

At least one of the pick-up elements (called retractable pick-up element) of the first rotating unit can be moved between a position of maximum distance and a position of minimum distance from the centre of the first rotating unit.

According to an aspect of the invention, the transfer system can be configured in at least two operating conditions, being:
- a first condition, in which the exchange of containers or parisons between the two rotating units is enabled;
- a second condition, in which at least one of the environments is cleaned or sanitised.

In the first condition, the separation element assumes the second position and the retractable pick-up element assumes the position of maximum distance from the centre of the first rotating unit.

In the second condition, the separation element assumes the first position and the retractable pick-up element assumes the position of minimum distance from the centre of the first rotating unit.

Preferably, the transfer system comprises a control unit configured to force the transfer system to assume the first or the second condition and to command the passage of the transfer system from the first to the second condition, and vice versa.

According to one embodiment, the separation element is a sliding wall. According to another embodiment, the separation element is a door. According to an aspect of the invention, the retractable pick-up element is radially translatable between the position of maximum distance and the position of minimum distance from the centre of the first rotating unit. According to an aspect of the invention, the transfer system comprises movement means of the retractable pick-up element which comprise:
- a guide on which the retractable pick-up element is slidably mounted;
- a cam sector operatively active on the retractable pick-up element so as to move it along the guide.

According to one embodiment, the movement means also comprise an elastic member operatively active on the retractable pick-up element in order to return it from the position of minimum distance to the position of maximum distance from the centre of the first rotating unit.

According to one embodiment, there is a plurality of retractable pick-up elements adjacent to one another, each of which is movable between the position of maximum distance and the position of minimum distance from the centre of the first rotating unit.

The defined technical task and the specified aims are substantially achieved by a treatment or processing apparatus for treating or processing containers or parisons, comprising:
- at least a first treatment or processing unit and a second treatment or processing unit;
- the transfer system proposed above, which is interposed between the two treatment and processing units.

For example, the first treatment or processing unit is a machine for forming containers starting from parisons made of thermoplastic material and the second treatment or processing unit is a machine for filling the containers formed.

The stated technical task and specified objects are substantially achieved by a process for sanitising or cleaning one of the environments of the transfer system, comprising the steps of:
- retracting the retractable pick-up element towards the centre of the first rotating unit;
- monitoring the exchange zone and checking for the presence of the retractable pick-up element inside the exchange zone;
- in response to the detection of the absence of the retractable pick-up element from the exchange zone, moving the separation element towards the exchange zone;

- monitoring the exchange zone and checking the position of the separation element inside the exchange zone;
- in response to the detection of the separation element in the first position so that it separates the two environments, sending a sanitising or washing solution into the environment to be sanitised/cleaned;
- after a predetermined time interval for action of the sanitising or washing solution in the environment, moving the separation element away from the exchange zone;
- monitoring the exchange zone and checking the position of the separation element inside the exchange zone;
- in response to the detection of the separation element in the second position so that it enables communication between the two environments, moving the retractable pick-up element away from the centre of the first rotating unit;
- monitoring the exchange zone and checking for the presence of the retractable pick-up element inside the exchange zone;
- in response to the detection of the retractable pick-up element at the maximum distance from the centre of the first rotating unit, signalling the end of the sanitising or cleaning.

According to an aspect of the invention, the step of retracting the retractable pick-up element towards the centre of the first rotating unit at least partly overlaps the step of moving the separation element towards the exchange zone.

According to an aspect of the invention, the step of moving the retractable pick-up element away from the centre of the first rotating unit at least partly overlaps the step of moving the separation element away from the exchange zone.

According to an aspect of the invention, the step of monitoring the exchange zone and checking for the presence of the retractable pick-up element inside the exchange zone is carried out by means of a first sensor.

According to an aspect of the invention, the step of monitoring the exchange zone and checking the position of the separation element therein is carried out by means of a second sensor.

Further characteristics and advantages of the present invention will become more apparent from the approximate and thus non-limiting description of a preferred, but not exclusive, embodiment of a transfer system for transferring containers or parisons and a treatment or processing apparatus comprising such system, as illustrated in the accompanying drawings, in which:

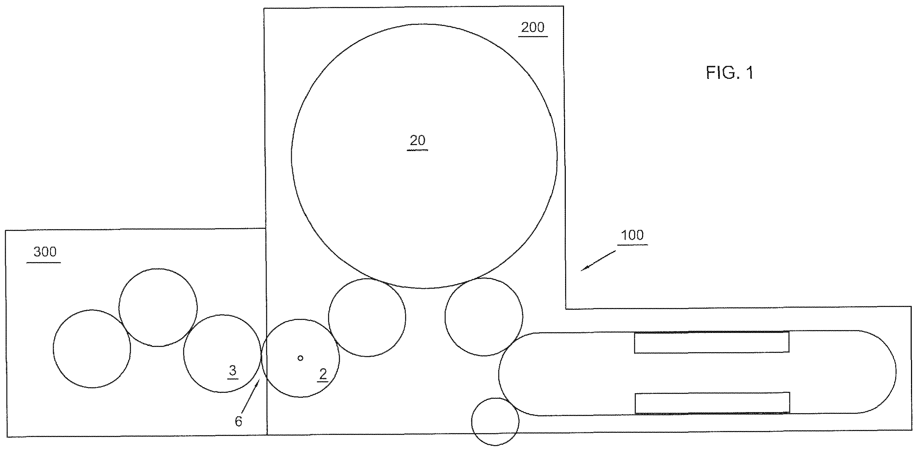

- figure 1 illustrates a treatment or processing apparatus for treating or processing containers or parisons, according to the present invention, in a schematic view;

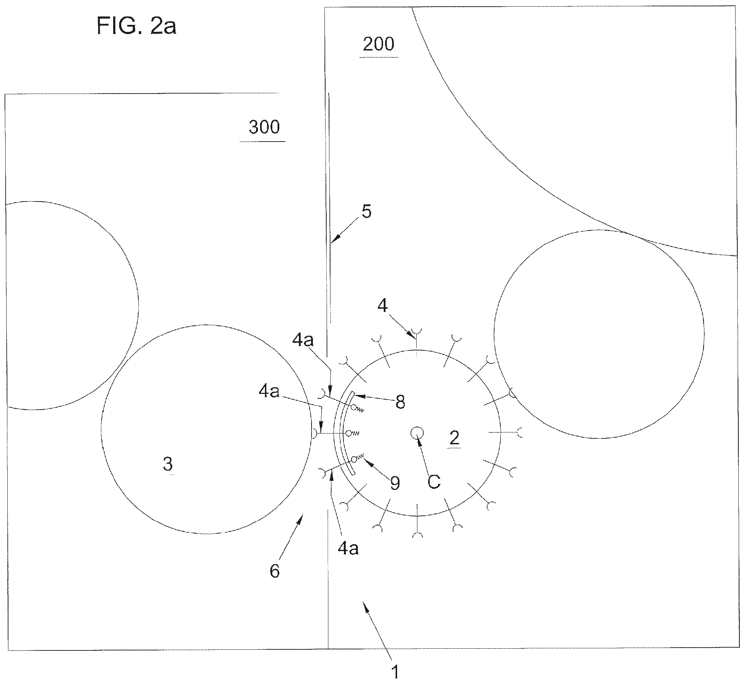

- figure 2a illustrates a transfer system for transferring containers or parisons according to the present invention, in a first operating condition, in a schematic view;

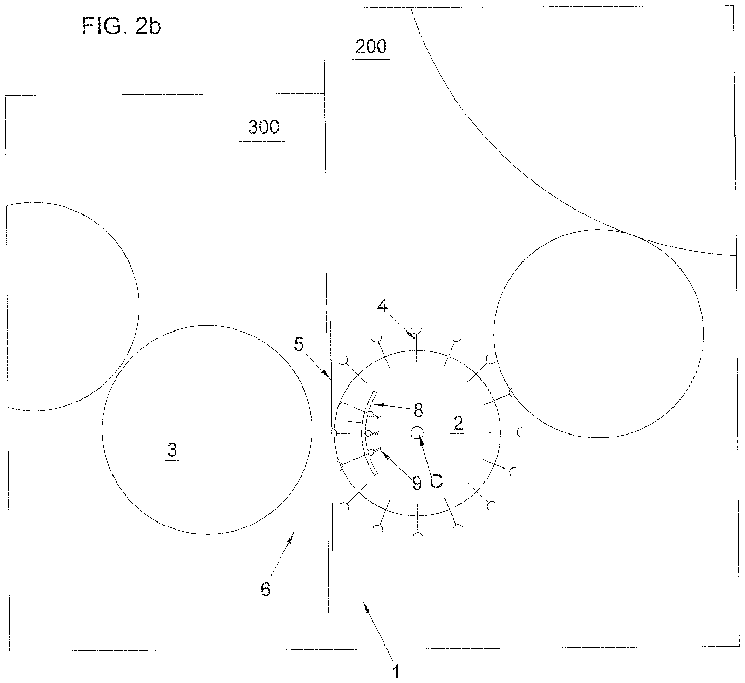

- figure 2b illustrates a transfer system for transferring containers or parisons according to the present invention, in a second operating condition, in a schematic view;
- figure 3 illustrates a detail of the transfer system of figure 2a in a sectioned lateral view;
- figure 4 illustrates a detail of the transfer system of figure 2b in a sectioned lateral view;
- figures 5a-5b illustrate a flow diagram relative to a process for sanitising or cleaning one of the environments of the transfer system, according to the present invention.

With reference to the figures, the number 1 indicates a transfer system for transferring containers or parisons.

The transfer system 1 comprises a first rotating unit 2 and a second rotating unit 3. Such rotating units 2, 3 are arranged in two adjacent environments 200, 300 and can communicate with one another for the transfer of containers or parisons from one environment to the other. Preferably, the rotating units 2, 3 are transfer star-wheels. Preferably, such environments 200, 300 are bordered by box-shaped casings and communicate with one another through an opening defining an exchange zone 6 of containers or parisons. The two rotating units 2, 3 are facing at the exchange zone 6.

Pick-up elements 4 for picking up the containers or the parisons are installed on each of the two rotating units 2, 3.

In the embodiment described and illustrated herein, each pick-up element 4 comprises a gripper for gripping a container or parison by the neck.

In an alternative embodiment, each pick-up element 4 comprises a support compartment for supporting the neck of a container or parison.

It is also envisaged that the pick-up elements 4 installed on the first rotating unit 2 are of a different type with respect to the pick-up elements installed on the second rotating unit 3. For example, the pick-up elements 4 on the first rotating unit 2 comprise a gripper whereas the pick-up elements 4 on the second rotating unit 3 comprise a neck support compartment, or vice versa.

The transfer system 1 further comprises a separation element 5 of the environments 200, 300, which is configurable in at least a first position in which it separates the two environments 200, 300 so that the transfer of the containers or the parisons from one environment to the other is prevented, and a second position in which it enables communication between the two environments 200, 300 so that the two rotating units 2, 3 are facing at the exchange zone 6 of containers or parisons.

In the embodiment described and illustrated herein, the separation element 5 is a sliding wall.

In an alternative embodiment, the separation element 5 is a door, sliding or hinged.

Preferably, the separation element 5 is moved by a motorised means and/or by an automatic actuation system of the known type.

Alternatively, the separation element 5 is moved manually by an operator. Advantageously, at least one of the pick-up elements of the second rotating unit 2, indicated by number 4a, can be moved between a position of maximum distance and a position of minimum distance from the centre C of the first rotating unit 2.

Such pick-up element 4a is identified here for convenience purposes as the "retractable pick-up element".

Preferably, the transfer system 1 can be configured in at least two operating conditions, being:
- a first condition, in which the exchange of containers or parisons between the two rotating units 2, 3 is enabled;
- a second condition, in which at least one of the environments is cleaned or sanitised.

In particular, cleaning or sanitising an environment means herein the set of cleaning operations (mechanical and/or chemical) necessary for preparing the equipment, carried out without having to dismantle the system and known in the sector as C.I.P. ("Cleaning In Place").

When the transfer system 1 is in the first condition, the separation element 5 assumes the second position and the retractable pick-up element 4a assumes the position of maximum distance from the centre C of the first rotating unit 2.

When the transfer system 1 is in the second condition, the separation element 5 assumes the first position and the retractable pick-up element 4a assumes the position of minimum distance from the centre C of the first rotating unit 2.

Preferably, the transfer system 1 further comprises a control unit configured to force the system 1 to assume the first or the second condition and to command the passage of the system 1 from the first to the second condition, and vice versa.

In one embodiment, the control unit is also configured to command the actuation of the retractable pick-up element 4a and the movement of the separation element 5.

In an alternative embodiment, the actuation of the retractable pick-up element 4a and the movement of the separation element 5 are unconstrained, i.e. independent, from the control unit.

Preferably, the retractable pick-up element 4a is radially translatable between the position of maximum distance and the position of minimum distance from the centre C of the first rotating unit 2.

Preferably, the transfer system 1 comprises movement means 7, 8, 9 for moving the retractable pick-up element 4a.

In the embodiment described and illustrated herein, the movement means 7, 8, 9 comprise:
- a guide 7 on which the retractable pick-up element 4a is slidably mounted;
- a cam sector 8 operatively active on the retractable pick-up element 4a so as to move it along the guide 7.

Preferably, the cam sector 8 can be pneumatically controlled.

In particular, the retractable pick-up element 4a comprises a projecting portion 10 on which the cam sector 8 abuts so as to move the retractable pick-up element 4a along the guide 7.

Preferably, the projecting portion 10 is at an end of the retractable pick-up element 4a closest to the centre C of the first rotating unit 2.

Preferably, the projecting portion 10 extends in a substantially orthogonal direction to the plane of the first rotating unit 2.

Preferably, the projecting portion 10 has a substantially overturned T-shaped cross section.

The cam sector 8 acts on the projecting portion 10 by moving towards the centre C of the first rotating unit 2. In other words, the cam sector 8 moves radially.

According to one embodiment, the cam sector 8 acts on the at least one retractable pick-up element 4a for moving it from the position of maximum distance to the position of minimum distance, and vice versa.

In the embodiment described and illustrated herein, the movement means 7, 8, 9 further comprise an elastic member 9 operatively active on the retractable pick-up element 4a in order to return it from the position of minimum distance to the position of maximum distance from the centre C of the first rotating unit 2.

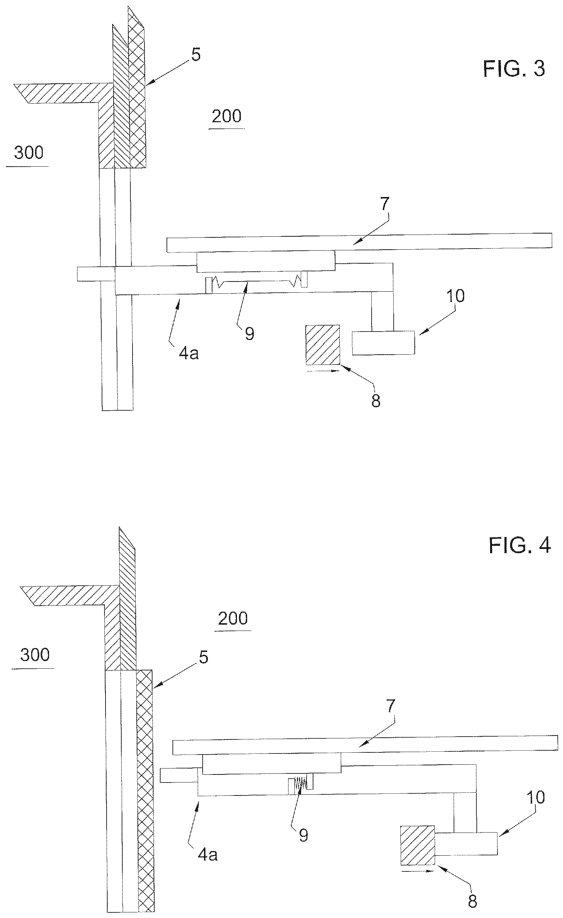

In particular, the elastic member 9 is mounted between the guide 7 and the retractable pick-up element 4a so that:
- during the first operating condition of the transfer system 1 (enabled exchange of the containers/parisons), the retractable pick-up element 4a is kept in the position of maximum distance from the centre C (see figure 3);
- during the second operating condition of the transfer system 1 (cleaning and sanitising), the retractable pick-up element 4a is in the position of minimum distance from the centre C (see figure 4).

In particular, in the position of minimum distance from the retractable pick-up element 4a the elastic member 9 assumes a compression configuration, whereas in the position of maximum distance the elastic member 9 extends completely.

Preferably, a plurality of adjacent pick-up elements can be moved between the position of maximum distance and the position of minimum distance from the centre C of the first rotating unit 2.

Such pick-up elements are indicated herein by number 4a and called "retractable pick-up elements". The number of retractable pick-up elements 4a is established as a function of the size and characteristics of the plant.

In particular, the cam sector 8 is shaped so as to act simultaneously on the projecting portions 10 of all the retractable pick-up elements 4a.

The operation of the transfer system for transferring containers or parisons, according to the present invention, is described below with reference to only one retractable pick-up element 4a. It is to be noted that the above applies to all the retractable pick-up elements 4a present in the second rotating unit 2.

It is to be considered that the transfer system 1 is initially in the first operating condition, in which the exchange of containers and parisons between the two rotating units 2, 3 is enabled.

The separation element 5 is in the second position, i.e. communication between the two adjacent environments 200, 300 is enabled, and the retractable pick-up element 4a is in the position of maximum distance from the centre C of the first rotating unit 2. The elastic member 9 keeps the retractable pick-up element 4a in such position (see figure 3).

The two rotating units 2, 3 are therefore in communication through the exchange zone 6 of containers or parisons.

When it is necessary to clean or sanitise, the control unit forces the transfer system 1 to pass from the first to the second operating condition. The separation element 5 is then taken from the second to the first position, e.g. manually or using a dedicated motorised means, therefore it actuates a separation between the environments 200, 300.

The cam sector 8, which is pneumatically controlled, acts on the projecting portion 10 and moves the retractable pick-up element 4a radially along the guide 7, from the position of maximum distance to the position of minimum distance from the centre C of the first rotating unit 2.

The retractable pick-up element 4a thus frees the exchange zone 6 as illustrated in figure 4.

During the second operating condition, the retractable pick-up element 4a is kept in the position of minimum distance by means of the balance between the force imparted by the cam sector 8 on the projecting portion 10 and the force imparted in the opposite direction by the elastic member 9.

After cleaning or sanitising, the separation element 5 is brought back into the second position so that it enables communication to take place again between the two environments 200, 300.

The cam sector 8 finishes its action on the projecting portion 10 and the elastic member 9 brings the retractable pick-up elements 4a back from the position of minimum distance to the position of maximum distance.

The treatment or processing apparatus 100 of containers or parisons, comprises:
- at least a first treatment or processing unit 20 and a second treatment or processing unit (not illustrated);
- a transfer system 1 according to what is described above, which is interposed between the two treatment or processing units.

For example, the first treatment or processing unit 20 is a machine for forming containers starting from parisons made of thermoplastic material and the second treatment or processing unit is a machine for filling the formed containers.

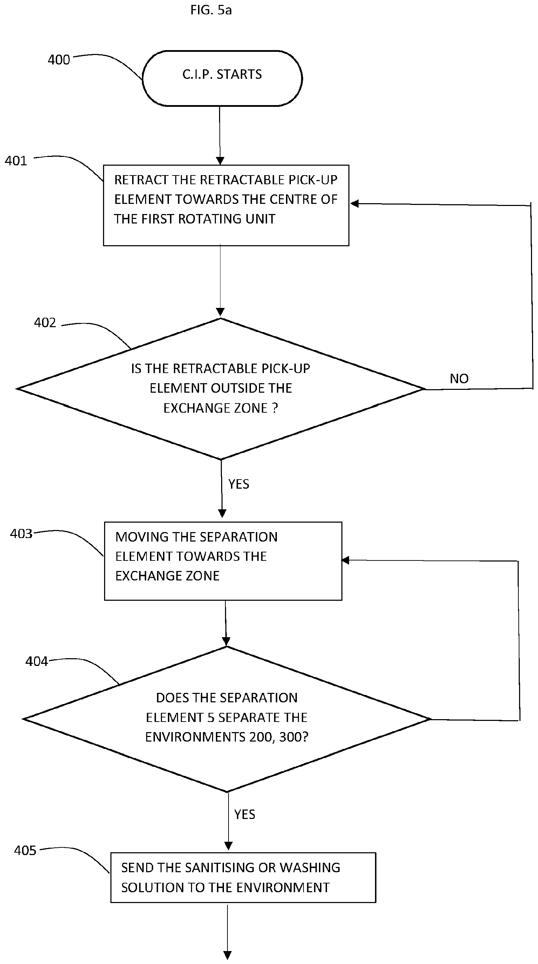

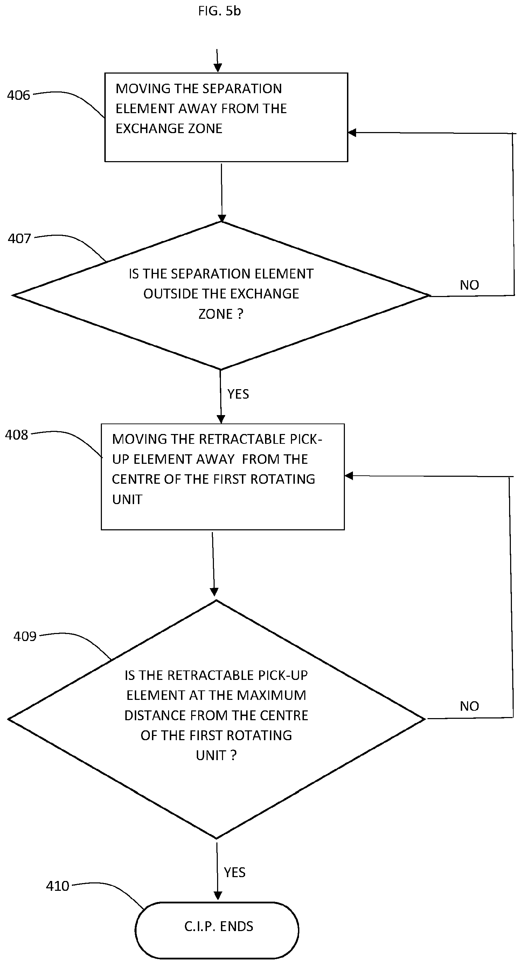

Figures 5a-5b illustrate the flow diagram of a process for sanitising or cleaning one of the environments containing the rotating units. In particular, figure 5b is the continuation of figure 5a.

In this case, the environment subject to sanitising or washing is the one indicated by number 300, i.e. containing the second rotating unit 3.

The sanitising or cleaning cycle starts at the block indicated by number 400, indicated in fig. 5a as "C.I.P. start", which can be activated automatically, e.g. at pre-determined time intervals, or upon the request of an operator.

Number 401 indicates a step in which the retractable pick-up element 4a is retracted towards the centre C of the first rotating unit 2.

The presence and/or the position of the retractable pick-up element 4a in the exchange zone 6 is monitored, e.g. by means of a first sensor.

As long as the retractable pick-up element 4a is in the exchange zone 6, its retraction continues towards the centre C of the first rotating unit 2. When the retractable pick-up element 4a is outside the exchange zone 6 (block indicated by 402), the separation element 5 is moved towards the exchange zone 6, to block 403.

The position of the separation element 5 in the exchange zone 6 is monitored, e.g. by means of a second sensor.

As long as the two environments 200, 300 are still in communication, the separation element 5 continues to move. When the separation element 5 reaches the first position, so that it separates the two environments 200, 300 (block indicated by 404), a sanitising or washing solution is sent to the environment 300 (block 405).

So that the sanitising or washing solution works effectively, it is preferable to wait for a predefined time interval, at the end of which the separation element 5 is moved away from the exchange zone 6 (block 406).

The second sensor monitors the position of the separation element 5 in the exchange zone 6.

When the separation element 5 has reached the second position, so that communication is enabled between the two environments 200, 300 (block indicated by 407), the retractable pick-up element 4a starts to advance towards the exchange zone 6, moving away from the centre C of the first rotating unit 2 (block indicated by 408).

The first sensor monitors the presence and/or position of the retractable pick-up element 4a in the exchange zone 6.

When the retractable pick-up element 4a reaches the maximum distance from the centre C of the first rotating unit 2 (block indicated by 409), the cycle terminates (block indicated with 410).

According to an aspect of the invention, the step of retracting the retractable pick-up element 4a towards the centre C of the first rotating unit 2 at least partly overlaps the step of moving the separation element 5 towards the exchange zone 6.

According to an aspect of the invention, the step of moving the retractable pick-up element 4a away from the centre C of the first rotating unit 2 at least partly overlaps the step of moving the separation element 5 away from the exchange zone 6.

The characteristics of a transfer system for transferring containers and parisons and a treatment or processing apparatus comprising such system, according to the present invention, prove to be clear from the description provided as do the advantages thereof.

In particular, providing one or more movable pick-up elements for freeing the exchange zone between the two adjacent environments makes it possible to simplify the structure with respect to known solutions.

## Claims

1. A transfer system (1) for transferring containers or parisons, comprising:
- a first rotating unit (2) and a second rotating unit (3), respectively arranged in two adjacent environments (200, 300), pick-up elements (4) for picking up the containers or the parisons being installed on each of said rotating units (2, 3);
- a separation element (5) of said environments (200, 300), which is configurable in at least a first position in which it separates the two environments (200, 300) so that the transfer of the containers or the parisons from one environment to the other is prevented, and a second position in which it enables communication between the two environments (200, 300) so that said rotating units (2, 3) are facing at an exchange zone (6) of containers or parisons,
**characterised in that** at least one of said pick-up elements (4a) of the first rotating unit (2) is movable between a position of maximum distance and a position of minimum distance from the centre (C) of said first rotating unit (2).

2. The transfer system (1) according to claim 1, configurable in at least two operating conditions, being:
• a first condition, in which the exchange of containers or parisons between two rotating units (2, 3) is enabled;
• a second condition, in which at least one of said environments (200, 300) is cleaned or sanitised,
in said first condition, the separation element (5) assuming the second position and said at least one pick-up element (4a) assuming the position of maximum distance from the centre (C) of said first rotating unit (2),
in said second condition, the separation element (5) assuming the first position and said at least one pick-up element (4a) assuming the position of minimum distance from the centre (C) of said first rotating unit (2).

3. The transfer system (1) according to claim 2, further comprising a control unit configured to force said transfer system (1) to assume the first or the second condition and to command the passage of the transfer system (1) from the first to the second condition, and vice versa.

4. The transfer system (1) according to any one of the preceding claims, wherein said separation element (5) is a sliding wall.

5. The transfer system (1) according to any one of claims 1 to 3, wherein said separation element (5) is a door.

6. The transfer system (1) according to any one of the preceding claims, wherein said at least one pick-up element (4a) is radially translatable between the position of maximum distance and the position of minimum distance from the centre (C) of said first rotating unit (2).

7. The transfer system (1) according to claim 6, further comprising movement means (7, 8, 9) of said at least one pick-up element (4a) which comprise:
- a guide (7) on which said at least one pick-up element (4a) is slidably mounted;
- a cam sector (8) operatively active on said at least one pick-up element (4a) so as to move it along said guide (7).

8. The transfer system (1) according to claim 7, wherein said movement means (7, 8, 9) further comprise an elastic member (9) operatively active on said at least one pick-up element (4a) in order to return it from the position of minimum distance to the position of maximum distance from the centre (C) of the first rotating unit (2).

9. The transfer system (1) according to any one of the preceding claims, wherein a plurality of adjacent pick-up elements (4a) are movable between the position of maximum distance and the position of minimum distance from the centre (C) of said first rotating unit (2).

10. A treatment or processing apparatus (100) of containers or parisons, comprising:
- at least a first treatment or processing unit (20) and a second treatment or processing unit;
- a transfer system (1) according to any one of the preceding claims, which is interposed between said two treatment and processing units.

11. The treatment or processing apparatus (100) according to claim 10, wherein said first treatment or processing unit (20) is a moulding machine for moulding containers starting from parisons made of a thermoplastic material and said second treatment or processing unit is a filling machine of the moulded containers.

12. A sanitising or cleaning process for sanitising or cleaning one of the environments (300) of the transfer system (1) according to any one of claims 1 to 9, comprising steps of:
- retracting said at least one pick-up element towards the centre of the first rotating unit (401);
- monitoring the exchange zone and checking for the presence of said at least one pick-up element inside the exchange zone (402);
- in response to the detection of the absence of said pick-up element from the exchange zone, moving the separation element towards the exchange zone (403);
- monitoring the exchange zone and checking for the presence of said separation element inside the exchange zone (404);
- in response to the detection of the separation element in said first position so that it separates the two environments, sending a sanitising or washing solution (405) into said environment;
- after a predetermined time interval for action of the sanitising or washing solution in the environment, moving the separation element away from the exchange zone (406);
- monitoring the exchange zone and checking for the presence of the separation element inside the exchange zone (407);
- in response to the detection of the separation element in said second position so that it enables communication between the two environments, moving said at least one pick-up element away from the centre of the first rotating unit (408);
- monitoring the exchange zone and checking for the presence of said at least one pick-up element inside the exchange zone (409);
- in response to the detection of said at least one pick-up element at the maximum distance from the centre of the first rotating unit, signalling the end of the sanitising or washing (409, 410).

13. The process according to claim 12, wherein the step of retracting said at least one pick-up element towards the centre of the first rotating unit (401) at least partly overlaps the step of moving the separation element towards the exchange zone (403).

14. The process according to claim 12 or 13, wherein the step of moving away said at least one pick-up element from the centre of the first rotating unit (408) at least partly overlaps the step of moving the separation element away from the exchange zone (406).

15. The process according to any one of claims 12 to 14, wherein said step of monitoring the exchange zone and checking the presence of said at least one pick-up element inside the exchange zone (402, 409) is carried out by means of a first sensor.

16. The process according to any one of claims 12 to 15, wherein said step of monitoring the exchange zone and checking the position of the separation element inside it (404, 407) is carried out by means of a second sensor.

17. Computer program product loadable into a memory of a computer or control unit, said computer program product comprising instructions which, when run by the computer or control unit, determine the execution of the process steps according to any one of claims from 12 to 16.

## Patentansprüche

1. Übergabesystem (1) zum Übergeben von Behältern oder Vorformlingen, umfassend:
- eine erste Dreheinheit (2) und eine zweite Dreheinheit (3), die jeweils in zwei benachbarten Umgebungen (200, 300) angeordnet sind, wobei Aufnahmeelemente (4) zum Aufnehmen der Behälter oder der Vorformlinge auf einer jeden Dreheinheit (2, 3) installiert sind;
- ein Trennelement (5) der Umgebungen (200, 300), das in mindestens einer ersten Position, in der es die beiden Umgebungen (200, 300) trennt, so dass die Übergabe der Behälter oder Vorformlinge von einer Umgebung zur anderen verhindert wird, und eine zweite Position, in der es die Kommunikation zwischen den beiden Umgebungen (200, 300) ermöglicht, so dass die Dreheinheiten (2, 3) auf eine Austauschzone (6) von Behältern oder Vorformlingen gerichtet sind, konfigurierbar ist, **dadurch gekennzeichnet, dass** mindestens eines der Aufnahmeelemente (4a) der ersten Dreheinheit (2) zwischen einer Position mit maximalem Abstand und einer Position mit minimalem Abstand von der Mitte (C) der ersten Dreheinheit (2) bewegbar ist.

2. Übergabesystem (1) nach Anspruch 1, das in mindestens zwei Betriebszuständen konfigurierbar ist, nämlich:
• ein erster Zustand, in dem der Austausch von Behältern oder Vorformlingen zwischen zwei Dreheinheiten (2, 3) ermöglicht ist;
• ein zweiter Zustand, in dem mindestens eine der Umgebungen (200, 300) gereinigt oder desinfiziert wird,
wobei im ersten Zustand das Trennelement (5) die zweite Position einnimmt und das mindestens eine Aufnahmeelement (4a) die Position mit maximalem Abstand von der Mitte (C) der ersten Dreheinheit (2) einnimmt, wobei im zweiten Zustand das Trennelement (5) die erste Position einnimmt und das mindestens eine Aufnahmeelement (4a) die Position mit minimalem Abstand von der Mitte (C) der ersten Dreheinheit (2) einnimmt.

3. Übergabesystem (1) nach Anspruch 2, das ferner eine Steuereinheit umfasst, die so konfiguriert ist, dass sie das Übergabesystem (1) zwingt, den ersten oder den zweiten Zustand einzunehmen und den Durchgang des Übergabesystems (1) vom ersten zum zweiten Zustand und umgekehrt zu befehlen.

4. Übergabesystem (1) nach einem der vorhergehenden Ansprüche, wobei das Trennelement (5) eine Gleitwand ist.

5. Übergabesystem (1) nach einem der Ansprüche 1 bis 3, wobei das Trennelement (5) eine Tür ist.

6. Übergabesystem (1) nach einem der vorhergehenden Ansprüche, wobei das mindestens eine Aufnahmeelement (4a) zwischen der Position mit maximalem Abstand und der Position mit minimalem Abstand von der Mitte (C) der ersten Dreheinheit (2) radial verschiebbar ist.

7. Übergabesystem (1) nach Anspruch 6, ferner umfassend Bewegungsmittel (7, 8, 9) des mindestens einen Aufnahmeelements (4a), die umfassen:
- eine Führung (7), auf der das mindestens eine Aufnahmeelement (4a) verschiebbar montiert ist;
- einen Nockensektor (8), der betriebswirksam auf das mindestens eine Aufnahmeelement (4a) wirkt, um es entlang der Führung (7) zu bewegen.

8. Übergabesystem (1) nach Anspruch 7, wobei die Bewegungsmittel (7, 8, 9) ferner ein elastisches Element (9) umfassen, das betriebswirksam auf das mindestens eine Aufnahmeelement (4a) wirkt, um es von der Position mit minimalem Abstand zur Position mit maximalem Abstand von der Mitte (C) der ersten Dreheinheit (2) zurückzuführen.

9. Übergabesystem (1) nach einem der vorhergehenden Ansprüche, wobei eine Vielzahl an benachbarten Aufnahmeelementen (4a) zwischen der Position mit maximalem Abstand und der Position mit minimalem Abstand von der Mitte (C) der ersten Dreheinheit (2) bewegbar sind.

10. Behandlungs- oder Verarbeitungsvorrichtung (100) von Behältern oder Vorformlingen, umfassend:
- mindestens eine erste Behandlungs- oder Verarbeitungseinheit (20) und eine zweite Behandlungs- oder Verarbeitungseinheit;
- ein Übergabesystem (1) nach einem der vorhergehenden Ansprüche, das zwischen den beiden Behandlungs- und Verarbeitungseinheiten angeordnet ist.

11. Behandlungs- oder Verarbeitungsvorrichtung (100) nach Anspruch 10, wobei die erste Behandlungs- oder Verarbeitungseinheit (20) eine Formmaschine zum Formen von Behältern ausgehend von Vorformlingen aus einem thermoplastischen Material ist und die zweite Behandlungsoder Verarbeitungseinheit eine Füllmaschine der geformten Behälter ist.

12. Desinfektions- oder Reinigungsverfahren zum Desinfizieren oder Reinigen einer der Umgebungen (300) des Übergabesystems (1) nach einem der Ansprüche 1 bis 9, umfassend die Schritte:
- Zurückziehen des mindestens einen Aufnahmeelements zur Mitte der ersten Dreheinheit (401);
- Überwachen der Austauschzone und Prüfen des Vorhandenseins des mindestens einen Aufnahmeelements innerhalb der Austauschzone (402);
- als Reaktion auf die Detektion der Abwesenheit des Aufnahmeelements von der Austauschzone, Bewegen des Trennelements in Richtung der Austauschzone (403);
- Überwachen der Austauschzone und Prüfen des Vorhandenseins des Trennelements innerhalb der Austauschzone (404);
- als Reaktion auf die Detektion des Trennelements in der ersten Position, so dass es die beiden Umgebungen trennt, Senden einer Desinfektionsoder Waschlösung (405) in die Umgebung;
- nach einem vorbestimmten Zeitintervall für die Einwirkung der Desinfektions- oder Waschlösung in die Umgebung, Wegbewegen des Trennelements von der Austauschzone (406);
- Überwachen der Austauschzone und Prüfen des Vorhandenseins des Trennelements innerhalb der Austauschzone (407);
- als Reaktion auf die Detektion des Trennelements in der zweiten Position, so dass es eine Kommunikation zwischen den beiden Umgebungen ermöglicht, Wegbewegen des mindestens einen Aufnahmeelements von der Mitte der ersten Dreheinheit (408);
- Überwachen der Austauschzone und Prüfen des Vorhandenseins des mindestens einen Aufnahmeelements innerhalb der Austauschzone (409);
- als Reaktion auf die Detektion des mindestens einen Aufnahmeelements im maximalen Abstand von der Mitte der ersten Dreheinheit, Melden des Endes des Desinfizierens oder Waschens (409, 410).

13. Verfahren nach Anspruch 12, wobei der Schritt zum Zurückziehen des mindestens einen Aufnahmeelements in Richtung auf die Mitte der ersten Dreheinheit (401) zumindest teilweise den Schritt zum Bewegen des Trennelements in Richtung der Austauschzone (403) überlappt.

14. Verfahren nach Anspruch 12 oder 13, wobei der Schritt zum Wegbewegen des mindestens einen Aufnahmeelements von der Mitte der ersten Dreheinheit (408) zumindest teilweise den Schritt zum Wegbewegen des Trennelements von der Austauschzone (406) überlappt.

15. Verfahren nach einem der Ansprüche 12 bis 14, wobei der Schritt zum Überwachen der Austauschzone und zum Prüfen des Vorhandenseins des mindestens einen Aufnahmeelements innerhalb der Austauschzone (402, 409) mittels eines ersten Sensors ausgeführt wird.

16. Verfahren nach einem der Ansprüche 12 bis 15, wobei der Schritt zum Überwachen der Austauschzone und zum Überprüfen der Position des Trennelements darin (404, 407) mittels eines zweiten Sensors ausgeführt wird.

17. In einen Speicher eines Computers oder einer Steuereinheit ladbares Computerprogrammprodukt, wobei das Computerprogrammprodukt Anweisungen umfasst, die, wenn sie vom Computer oder der Steuereinheit ausgeführt werden, die Ausführung der Prozessschritte nach einem der Ansprüche 12 bis 16 bestimmen.

## Revendications

1. Système de transfert (1) pour le transfert de conteneurs ou de préformes, comprenant :
- une première unité rotative (2) et une seconde unité rotative (3), respectivement disposées dans deux environnements adjacents (200, 300), des éléments de préhension (4) servant à saisir les conteneurs ou les préformes étant installés sur chacune desdites unités rotatives (2, 3) ;
- un élément de séparation (5) desdits environnements (200, 300) étant configurable dans au moins une première position dans laquelle il sépare les deux environnements (200, 300) de sorte que le transfert des conteneurs ou des préformes d'un environnement à l'autre est empêché, et une seconde position dans laquelle il permet la communication entre les deux environnements (200, 300) de sorte que lesdites unités rotatives (2, 3) se font face en correspondance d'une zone d'échange (6) de conteneurs ou de préformes,
**caractérisé en ce qu'**au moins un desdits éléments de préhension (4a) de la première unité rotative (2) est mobile entre une position de distance maximale et une position de distance minimale du centre (C) de ladite première unité rotative (2).

2. Système de transfert (1) selon la revendication 1, configurable dans au moins deux conditions de fonctionnement, étant :
• une première condition, dans laquelle l'échange de conteneurs ou de préformes entre deux unités rotatives (2, 3) est activé ;
• une deuxième condition, dans laquelle au moins l'un desdits environnements (200, 300) est nettoyé ou désinfecté,
dans ladite première condition, l'élément de séparation (5) adoptant la deuxième position et ledit au moins un élément de préhension (4a) adoptant la position de distance maximale du centre (C) de ladite première unité rotative (2),
dans ladite deuxième condition, l'élément de séparation (5) adoptant la première position et ledit au moins un élément de préhension (4a) adoptant la position de distance minimale du centre (C) de ladite première unité rotative (2).

3. Système de transfert (1) selon la revendication 2, comprenant de plus une unité de commande configurée pour forcer ledit système de transfert (1) à adopter la première ou la deuxième condition et pour commander le passage du système de transfert (1) de la première à la deuxième condition, et vice versa.

4. Système de transfert (1) selon l'une quelconque des revendications précédentes, dans lequel ledit élément de séparation (5) est une paroi coulissante.

5. Système de transfert (1) selon l'une quelconque des revendications 1 à 3, dans lequel ledit élément de séparation (5) est une porte.

6. Système de transfert (1) selon l'une quelconque des revendications précédentes, dans lequel ledit au moins un élément de préhension (4a) peut translater radialement entre la position de distance maximale et la position de distance minimale du centre (C) de ladite première unité rotative (2).

7. Système de transfert (1) selon la revendication 6, comprenant de plus des moyens de déplacement (7, 8, 9), dudit au moins un élément de préhension (4a), comprenant :
- un guide (7) sur lequel ledit au moins un élément de préhension (4a) est monté de façon coulissante ;
- un secteur à came (8) actif de manière fonctionnelle sur ledit au moins un élément de préhension (4a) de sorte à le déplacer le long dudit guide (7).

8. Système de transfert (1) selon la revendication 7, dans lequel lesdits moyens de déplacement (7, 8, 9) comprennent de plus un élément élastique (9) fonctionnellement actif sur ledit au moins un élément de préhension (4a) afin de le ramener de la position de distance minimale à la position de distance maximale du centre (C) de la première unité rotative (2).

9. Système de transfert (1) selon l'une quelconque des revendications précédentes, dans lequel plusieurs éléments de préhension adjacents (4a) sont mobiles entre la position de distance maximale et la position de distance minimale du centre (C) de ladite première unité rotative (2).

10. Appareil de traitement ou de transformation (100) de conteneurs ou de préformes, comprenant :
- au moins une première unité de traitement ou de transformation (20) et une seconde unité de traitement ou de transformation ;
- un système de transfert (1), selon l'une quelconque des revendications précédentes, étant interposé entre lesdites deux unités de traitement et de transformation.

11. Appareil de traitement ou de transformation (100) selon la revendication 10, dans lequel ladite première unité de traitement ou de transformation (20) est une machine à mouler servant à mouler des conteneurs à partir de préformes en matériau thermoplastique et ladite deuxième unité de traitement ou de transformation est une machine de remplissage des conteneurs moulés.

12. Procédé de désinfection ou de nettoyage servant à assainir ou à nettoyer l'un des environnements (300) du système de transfert (1) selon l'une quelconque des revendications 1 à 9, comprenant les étapes de :
- rétracter ledit au moins un élément de préhension vers le centre de la première unité rotative (401) ;
- contrôler la zone d'échange et vérifier la présence dudit au moins un élément de préhension à l'intérieur de la zone d'échange (402) ;
- en réponse à la détection de l'absence dudit élément de préhension de la zone d'échange, déplacer l'élément de séparation vers la zone d'échange (403) ;
- contrôler la zone d'échange et vérifier la présence dudit élément de séparation à l'intérieur de la zone d'échange (404) ;
- en réponse à la détection de l'élément de séparation dans ladite première position de sorte qu'il sépare les deux environnements, envoyer une solution de désinfection ou de lavage (405) dans ledit environnement ;
- après un intervalle de temps prédéterminé pour permettre à la solution de désinfection ou de lavage d'agir dans l'environnement, éloigner l'élément de séparation de la zone d'échange (406) ;
- contrôler la zone d'échange et vérifier la présence de l'élément de séparation à l'intérieur de la zone d'échange (407) ;
- en réponse à la détection de l'élément de séparation dans ladite seconde position de sorte qu'il permette la communication entre les deux environnements, éloigner ledit au moins un élément de préhension du centre de la première unité rotative (408) ;
- contrôler la zone d'échange et vérifier la présence dudit au moins un élément de préhension à l'intérieur de la zone d'échange (409) ;
- en réponse à la détection dudit au moins un élément de préhension à la distance maximale du centre de la première unité rotative, signaler la fin de la désinfection ou du lavage (409, 410).

13. Procédé selon la revendication 12, dans lequel l'étape de rétractation dudit au moins un élément de préhension vers le centre de la première unité rotative (401) se superpose au moins partiellement à l'étape de déplacement de l'élément de séparation vers la zone d'échange (403).

14. Procédé selon la revendication 12 ou 13, dans lequel l'étape d'éloignement dudit au moins un élément de préhension du centre de la première unité rotative (408) se superpose au moins partiellement à l'étape d'éloignement de l'élément de séparation de la zone d'échange (406).

15. Procédé selon l'une quelconque des revendications 12 à 14, dans lequel ladite étape de contrôle de la zone d'échange et de vérification de la présence dudit au moins un élément de préhension à l'intérieur de la zone d'échange (402, 409) est effectuée au moyen d'un premier capteur.

16. Procédé selon l'une quelconque des revendications 12 à 15, dans lequel ladite étape de contrôle de la zone d'échange et de vérification de la position de l'élément de séparation à l'intérieur de celle-ci (404, 407) est réalisée au moyen d'un deuxième capteur.

17. Produit de programme informatique pouvant être chargé dans une mémoire d'un ordinateur ou d'une unité de commande, ledit produit de programme informatique comprenant des instructions qui, lorsqu'elles sont exécutées par l'ordinateur ou l'unité de commande, déterminent l'exécution des étapes du procédé selon l'une quelconque des revendications de 12 à 16.
